# FASCICULE DE BREVET EUROPEEN

(11) **EP 0 688 151 B1**
(45) Date de publication et mention de la délivrance du brevet: **27.12.1996**
(21) Numéro de dépôt: 95401361.1
(22) Date de dépôt: 12.06.1995
(51) Int. Cl.: H05B 41/29, H02M 7/538

(54) **Dispositif de commande d'une lampe fluorescente à basse pression**
Anordnung zum Steuern einer Niederdruckleuchtstofflampe
Device for operating a low pressure discharge lamp

(30) Priorité: 15.06.1994 FR 9407330
(43) Date de publication de la demande: 20.12.1995
(73) Titulaire: SGS-THOMSON MICROELECTRONICS S.A., 94250 Gentilly (FR)
(72) Inventeur: Bildgen, Marco, F-94230 Cachan (FR)
(74) Mandataire: Schmit, Christian Norbert Marie

(56) Documents cités:
- EP-A- 0 059 064
- EP-A- 0 274 303

## Description

L'invention concerne un dispositif de commande pour une lampe fluorescente à basse pression.

Le comportement électrique de ces lampes fluorescentes qui contiennent des gaz (néon, argon) à basse pression, est similaire à celui d'une diode zener (avalanche), avec une résistance dans le gaz qui devient très faible et négative après le claquage. Des ions animés de vitesses importantes conduisent les atomes du gaz dans des états excités dans lesquels ils émettent des raies lumineuses.

Pour commander ces lampes, on utilise un dispositif de commande à source de courant et un circuit oscillant dans lequel est placé la lampe. Ce circuit oscillant comprend typiquement une inductance et un très gros condensateur en série avec la lampe et un très petit condensateur en parallèle sur la lampe. Ce système permet de faire passer des décharges de courant dans la lampe entre ces deux électrodes, dans un sens, puis l'autre, ce qui empêche la migration d'ions.

Selon l'état de la technique, le dispositif de commande à source de courant comprend deux commutateurs électroniques à transistors de puissance alimentés en haute tension continue et un transformateur en courant. Le transformateur en courant est de préférence un transformateur à saturation, qui limite le courant dans la lampe par saturation de son noyau magnétique et entraîne la commutation des commutateurs.

Les commutateurs électroniques utilisent généralement des transistors de puissance en technologie bipolaire pour la commutation et des diodes en parallèle et en inverse pour laisser passer le courant au moment des alternances, et différents éléments de protection, comme diodes et condensateurs.

Ces dispositifs à transformateur sont très encombrants et coûteux, car ils nécessitent beaucoup de composants et ne permettent que peu d'intégration. Par ailleurs, le temps de stockage des transistors bipolaires est une caractéristique très variable, par exemple prenant une valeur entre 2 et 7 microsecondes. Cette variation n'est pas négligeable devant le temps au bout duquel le transformateur sature pour une alternance de courant, de l'ordre de 3 microsecondes, pour une durée d'alternance de l'ordre de 10 microsecondes. Donc, le temps au bout duquel le transistor bipolaire devient non passant après saturation du transformateur dans une alternance varie de 5 à 10 microsecondes. Ceci est très gênant. En pratique, on effectue une mesure du temps de stockage de chaque transistor en sortie de fabrication pour le classer dans une famille correspondant à une fourchette étroite de valeurs, pour l'utiliser dans un dispositif de commande adapté par résistances à cette fourchette de valeurs. Tout ceci est fort pénalisant et très coûteux.

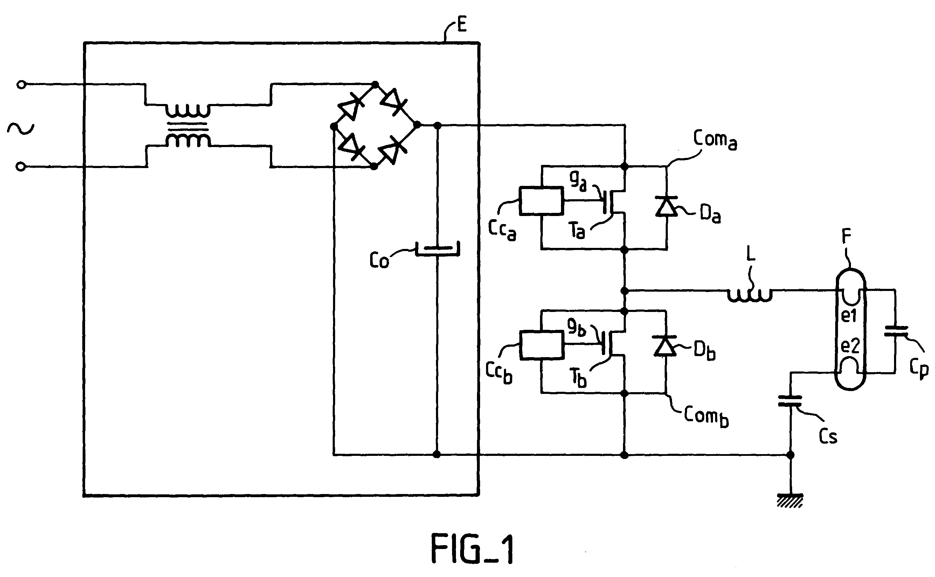

Dans l'invention, on s'intéresse à des dispositifs de commande sans transformateurs, utilisant donc un circuit de commande de commutation par transistor utilisé en commutation. Dans un exemple représenté sur la figure 1, le dispositif de commande comprend ainsi deux circuits Comₐ et Com_{b} identiques en série entre une haute tension continue et la masse, un circuit, par exemple Comₐ, comprenant un transistor Tₐ avec une diode Dₐ en inverse et en parallèle, formant le commutateur, et un circuit de commande de la grille du transistor, CCₐ. La diode est de préférence une diode parasite du transistor de puissance.

Le principe de fonctionnement est le suivant : au départ, un circuit est ouvert, l'autre fermé.

Celui qui est fermé laisse passer le courant de la lampe, et contrôle ce courant. Sur détection d'un évènement lié au courant, il se met à l'état ouvert c'est la fin de l'alternance. Le reste du courant passe dans l'autre circuit, encore ouvert, par la diode en inverse : cet évènement est détecté par ce circuit qui se met alors à l'état fermé (commande de grille pour mettre le transistor à l'état passant). Dans le même temps, le circuit oscillant se démagnétise. Quand il est démagnétisé, le courant passe dans l'autre sens.

Mais pour allumer la lampe, on utilise les caractéristiques du circuit oscillant à inductance et condensateur en parallèle : quand ce circuit oscillant travaille à la fréquence de résonnance, son impédance caractéristique devient très petite. Le courant dans le circuit oscillant devient donc très grand et la tension sur le condensateur en parallèle devient aussi très grande. C'est ce principe qui est utilisé pour claquer le gaz dans une lampe fluorescente basse pression. On a vu que le circuit oscillant comporte un condensateur parallèle très petit et un condensateur série très grand. Quand la lampe n'est pas allumée, au démarrage, elle est équivalente à un circuit ouvert. Si on note L, l'inductance, Cs, le condensateur série et Cp, le condensateur parallèle, la fréquence f0 de résonnance au démarrage du système circuit oscillant-lampe est donnée par f0=1/2π(L.Cp.Cs/(Cp+Cs))^{½}. Comme Cp<<Cs, on a f0≈1/2π(L.Cp)^{½}.

Si on travaille à cette fréquence de résonnance f0, on a vu que le courant devient très élevé dans le circuit oscillant et une surtension apparait alors sur le condensateur parallèle Cp et donc entre les deux électrodes de la lampe : à chaque alternance, la tension augmente, pour atteindre une tension suffisamment élevée (environ 1200 volts) pour faire claquer le gaz. La lampe est alors équivalente comme on l'a vu à une résistance très faible, qui laisse passer tout le courant : le condensateur parallèle Cp est alors virtuellement court-circuité et la nouvelle fréquence de résonnance f1 du système circuit oscillant-lampe est alors donnée par f1=1/2π(L.Cs)^{½}, f1 étant donc beaucoup plus basse que la première fréquence de résonnance f0 (car Cp<<Cs).

Cependant, autant il est intéressant de faire travailler le circuit oscillant à sa fréquence de résonnance f0 au démarrage, pour claquer et donc allumer la lampe, autant il est ensuite dangereux de continuer à travailler à la fréquence de résonnance f1, beaucoup plus basse.

En effet, pour ce nouveau système résonnant,- sans la capacité parallèle -, l'impédance caractéristique est aussi beaucoup plus faible, du à la grande capacité série Cs. Le courant devient alors beaucoup trop fort, avec le risque de casser le système.

On connaît du document EP-A-0 059 064 un circuit de commande en fréquence pour claquer une lampe qui balaye la fréquence jusqu'à la fréquence de résonnance, pour préchauffer et claquer la lampe, puis des fréquences plus basses. Un circuit de comparaison de tension est alors prévu par sécurité pour contrer le balayage en fréquence si la lampe ne claquait pas.

Le document EP 0 274 303 (Electricité de France) concerne un système de régulation d'un générateur onduleur à commutateurs alimentant une charge par induction, pour lequel on cherche à asservir en permanence la fréquence de la tension d'alimentation à une fréquence voisine de la fréquence propre de la charge. Ce document décrit une boucle de régulation en fréquence qui comprend des capteurs de mesure de l'intervalle du temps τ2 entre le début de conduction d'une diode et l'instant d'annulation du courant de charge. En fonction de la valeur de τ2, des moyens de correction de fréquence corrigent la fréquence du signal de commande de l'onduleur.

Un objet de l'invention est de limiter le courant après le claquage du gaz dans la lampe, afin d'éviter tout risque de détérioration de la lampe et son dispositif de commande.

Selon l'invention, on détecte la fréquence du courant dans la lampe, pour déterminer si la lampe est non allumée ou allumée.

Selon l'état de la lampe, on peut ainsi réguler le courant en permettant au système circuit oscillant-lampe de travailler à sa fréquence de résonnance, ou en le forçant à travailler à une fréquence un peu supérieure à la fréquence de résonnance.

Telle que caractérisée, l'invention concerne donc un dispositif de commande pour une lampe fluorescente à basse pression placée dans un circuit oscillant.

Selon l'invention, ce dispositif comprend un circuit de détection de la fréquence du courant dans la lampe pour délivrer en sortie une information fonction de l'état non allumé ou allumé de ladite lampe.

Selon une caractéristique de l'invention, le circuit de détection de fréquence est un circuit de détection d'une chute relative de fréquence.

Pour un dispositif de commande d'une telle lampe comprenant un transistor de puissance avec une diode en parallèle et en invrse à ses bornes, et un circuit de commande de commutation en parallèle sur le transistor et la diode et délivrant un signal de commande binaire de la grille du transistor de puissance, le circuit de détection selon l'invention comprend de préférence :
- un circuit de génération d'une rampe de tension, remis à zéro par un front de transition binaire du signal de commande binaire de la grille du transistor de puissance,
- un circuit échantillonneur-bloqueur, connecté en entrée à la sortie du circuit de génération de la rampe de tension, pour maintenir sur sa sortie le niveau de tension de la rampe au moment d'une première transition du signal de commande binaire de la grille du transistor de puissance,
- un circuit diviseur de tension en sortie du circuit de génération de la rampe de tension,
- un comparateur de tension, recevant en entrée la sortie de l'échantillonneur-bloqueur et une sortie du diviseur résistif, et
- un circuit de mémorisation du niveau haut de la sortie du comparateur de tension et délivrant un signal binaire indiquant l'état non allumé ou allumé de la lampe.

Selon une autre caractéristique de l'invention, le dispositif de commande comprend un circuit pour caler la fréquence du courant à la fréquence de résonnance de l'ensemble formé par le circuit oscillant et la lampe, et un circuit pour caler la fréquence du courant à une fréquence supérieure à la fréquence de résonnance de l'ensemble formé par le circuit oscillant et la lampe.

D'autres caractéristiques et avantages de l'invention sont détaillés dans la description suivante, faite à titre indicatif et non limitatif de l'invention et en référence aux dessins annexés, dans lesquels :
- la figure 1 est un schéma d'ensemble d'un dispositif à lampe fluorescente à basse pression,
- la figure 2 est un bloc diagramme d'un circuit de commande d'un commutateur à transistor de puissance comprenant un circuit de détection de fréquence selon l'invention,
- la figure 3 est un premier schéma détaillé d'un circuit de détection de fréquence selon l'invention ,
- la figure 4 est un diagramme des signaux correspondant au circuit de détection de fréquence détaillé à la figure 3,
- la figure 5 est un deuxième schéma détaillé d'un circuit de détection de fréquence selon l'invention,
- la figure 6 est un diagramme des signaux correspondant au circuit de détection de fréquence détaillé à la figure 5.

Le schéma d'ensemble représenté à la figure 1 représente une commande de lampe sans transformateur en courant pour lequel l'invention trouve particulièrement une application avantageuse, sans y être cependant limitée.

Il comporte principalement deux circuits Comₐ et Com_{b} placés en série entre une haute tension et la masse. Dans l'exemple la haute tension est fournie par un étage E d'alimentation à redresseur et capacité de filtrage C0 qui maintiennent une haute tension d'alimentation continue de l'ordre de 300V.

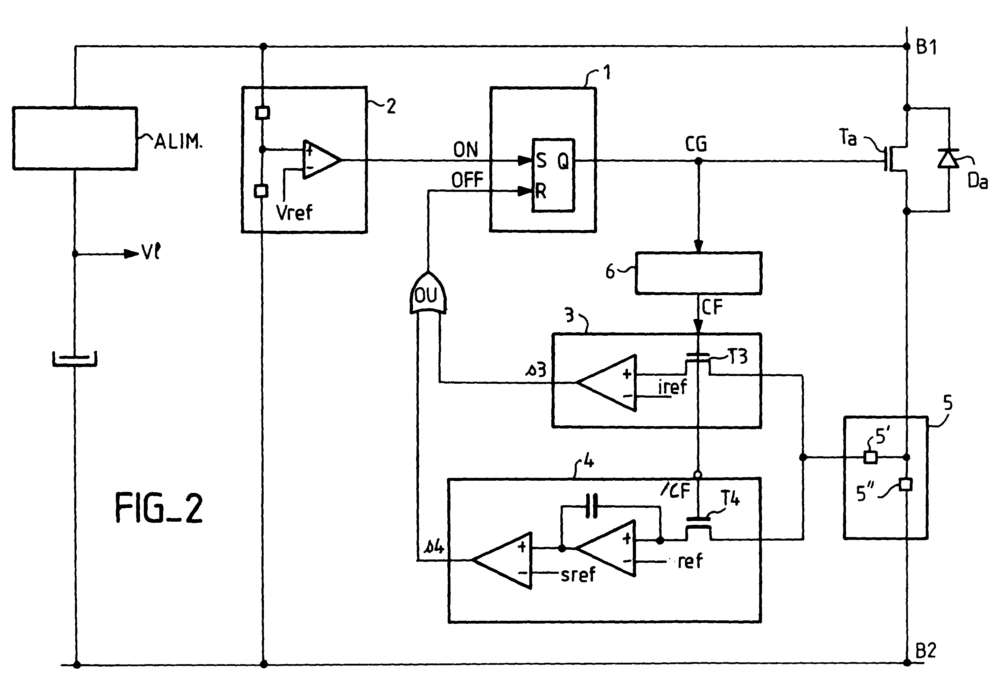

Les circuits Comₐ et Com_{b} seront détaillés dans la suite en relation avec la figure 2.

Le circuit Comₐ (Com_{b}) comprend principalement un transistor de puissance Tₐ (T_{b}) avec une diode en parallèle et en inverse Dₐ (D_{b}) et un circuit de commande de commutation CCₐ (CC_{b}) en parallèle sur ce transistor. Le circuit de commande de commutation commande la grille gₐ (g_{b}) du transistor de puissance associé pour le mettre à l'état passant (commutateur fermé) ou bloqué (commutateur ouvert).

Le point milieu M entre les deux circuits Comₐ et Com_{b} est connecté à une borne d'une inductance L connectée sur l'autre borne à une première électrode e1 d'une lampe fluorescente à basse pression F. L'autre électrode e2 de la lampe est connectée à un condensateur série Cs de forte capacité, relié à la masse. Un condensateur parallèle Cp est monté en parallèle sur la lampe. L'inductance L, le condensateur série Cs et le condensateur parallèle Cp forment le circuit oscillant source de courant pour la lampe.

Le principe général de fonctionnement est que pour une alternance, un seul transistor est passant : par exemple le transistor Tₐ est passant et le transistor T_{b} est bloqué. A la fin d'une alternance, pendant la période transitoire où le transistor Tₐ passe à l'état bloqué et où le transistor T_{b} est encore bloqué, le courant de fin d'alternance est vu comme un courant négatif par le circuit Com_{b} et passe dans la diode D_{b} montée en inverse et en parallèle sur le transistor T_{b}. Le circuit oscillant se démagnétise et dans le même temps le courant remonte progressivement vers zéro pour devenir positif (vu du circuit Com_{b}) : le transistor T_{b} devient alors passant.

La figure 2 représente un exemple de réalisation du circuit Comₐ avec le circuit de commande de commutation CCₐ du transistor de puissance Tₐ correspondant au fonctionnement en commande de commutation qui vient d'être décrit et comprenant un circuit de détection de fréquence selon l'invention.

Le transistor de puissance Tₐ est connecté entre deux bornes B1 et B2. La diode Dₐ est montée en inverse et en parallèle entre ces bornes. En pratique, c'est une diode parasite intrinsèque au transistor.

Le circuit de commande de commutation est connecté entre ces bornes B1 et B2 et délivre en sortie un signal binaire CG de commande de la grille gₐ du transistor Tₐ.

Il comprend un circuit de génération d'une tension V1 d'alimentation logique (Alim) à partir de la haute tension, nécessaire aux circuits logiques du circuit de commande de commutation. On prévoit une capacité de découplage entre la sortie de tension d'alimentation logique et la- borne B2, de manière à maintenir le niveau d'alimentation logique quand le commutateur est fermé (transistor passant, ramenant une tension presque nulle entre les bornes B1 et B2).

Le signal CG de commande de la grille du transistor de puissance est contrôlé par un circuit 1 de contrôle, en fonction des signaux qu'il reçoit en entrée.

Un premier signal d'entrée, noté ON sur la figure 1, est délivré par un circuit 2 de détection de début d'alternance. Dans l'exemple, la détection est basée sur la tension aux bornes B1 et B2 du transistor et de la diode. Ce circuit de détection de début d'alternance détecte la phase transitoire de changement d'alternance, quand l'autre commutateur a été mis à l'état bloqué, phase transitoire pendant laquelle la diode Dₐ en inverse conduit du courant, imposant ainsi une tension très faible proche de zéro (égale à la tension de seuil de la diode) entre les bornes B1 et B2. Un tel circuit comprendra typiquement un diviseur résistif dont le point milieu est connecté en entrée d'un comparateur de tension recevant une tension de référence Vref. Le signal ON généré en sortie, correspond donc à la détection d'une nouvelle alternance pour laquelle il faut commander l'état passant du transistor Tₐ, soit imposer une tension logique positive sur sa grille.

Un deuxième signal d'entrée, noté OFF sur la figure 2, est délivré selon l'invention par un premier circuit 3 de détection de fin d'alternance ou par un deuxième circuit 4 de détection de fin d'alternance. Dans l'exemple, la détection est basée sur le courant passant dans le transistor et ces deux circuits de détection de fin d'alternance sont connectés en entrée à un circuit 5 de dérivation du courant passant dans le transistor. Ce circuit 5 peut tout simplement comprendre une première charge de dérivation de courant 5' connectée entre une électrode du transistor et l'entrée des circuits 3 et 4 de détection de fin d'alternance et une deuxième charge résistive 5'' connectée entre cette électrode et la borne B2.

Dans l'exemple où le circuit de contrôle 1 comprend une bascule bistable de type RS, avec une entrée S de mise à un et une entrée R de mise à zéro, le signal ON est connecté sur l'entrée S de mise à 1 et le signal OFF sur l'entrée de mise à zéro. Quand le signal CG de commande de grille en sortie est à 1 (tension logique haute V1), le transistor de puissance est passant, correspondant à un court-circuit et laisse passer tout le courant de la lampe. Quand le signal CG de commande de grille en sortie est à 0 (tension logique nulle), le transistor de puissance est bloqué, correspondant à un circuit ouvert qui ne laisse passer aucun courant.

Selon l'invention, le circuit de commande de commutation comprend de préférence deux circuits de détection de fin d'alternance. Dans l'exemple, la détection est basée sur le courant.

Le premier circuit 3 de détection de fin d'alternance comprend un transistor T3 pour laisser passer ou non le courant issu du circuit 5 de dérivation de courant. Ce transistor est suivi en série d'un comparateur qui reçoit un courant de référence iref. La sortie du comparateur délivre un signal s3 de détection de courant. En pratique, le courant de référence a une valeur de quelques microampères (1µA=10⁻⁶A), qui correspond à une détection de fin d'alternance du courant dans le circuit oscillant, si on laisse le circuit oscillant travailler à sa fréquence de résonnance.

Le deuxième circuit de détection de fin d'alternance selon l'invention, est tel qu'il oblige le circuit oscillant à travailler à une fréquence supérieure à sa fréquence de résonnance. Dans l'exemple, il est basé sur la détection de la puissance dans la lampe, de manière à ne laisser passer que le courant nécessaire à développer la puissance nominale de la lampe.

Dans l'exemple représenté, il comprend un transistor T4 pour laisser passer ou non le courant issu du circuit 5 de dérivation, en série avec un intégrateur suivi d'un comparateur à une valeur de référence sref. Cette valeur de référence représente le courant moyen correspondant à la puissance nominale voulue, compte tenu du rapport du courant dérivé par le circuit 5 au courant dans la lampe.

L'intégrateur est réalisé simplement par un filtre passe-bas du premier ordre, ou , comme représenté, par un amplificateur opérationnel recevant sur son entrée positive, la sortie du circuit 5 de dérivation de courant, et sur son entrée négative, une valeur de référence qui dépend classiquement de l'excursion en tension utilisée en sortie du circuit 5, comme cela est bien connu de l'homme du métier. Une capacité est prévue, connectée entre l'entrée positive et la sortie de l'amplificateur. L'intégrale du courant est appliquée à l'entrée du comparateur qui effectue la comparaison à une valeur de référence sref correspondant à la puissance nominale de la lampe. La sortie du comparateur délivre un signal s4 de détection de courant. En pratique, on force la fin de l'alternance pour un courant dans la lampe encore supérieur aux quelques microampères du courant iref du premier circuit de détection, ce qui permet d'imposer au circuit oscillant une fréquence supérieure à la fréquence de résonnance.

Ainsi, selon l'invention, le dispositif de commande de la lampe fluorescente basse pression, comprend un circuit 3 pour caler le dispositif sur la fréquence de résonnance de l'ensemble circuit oscillant-lampe, et un circuit 4 pour le caler sur une fréquence légèrement supérieure.

Selon l'invention, un circuit 6 de détection de fréquence est prévu qui permet notamment d'activer ou bien le circuit 3 ou bien le circuit 4 de détection de fin d'alternance, en délivrant une information sur la fréquence de travail du circuit oscillant à partir du signal binaire CG de commande de la grille du transistor de puissance Tₐ.

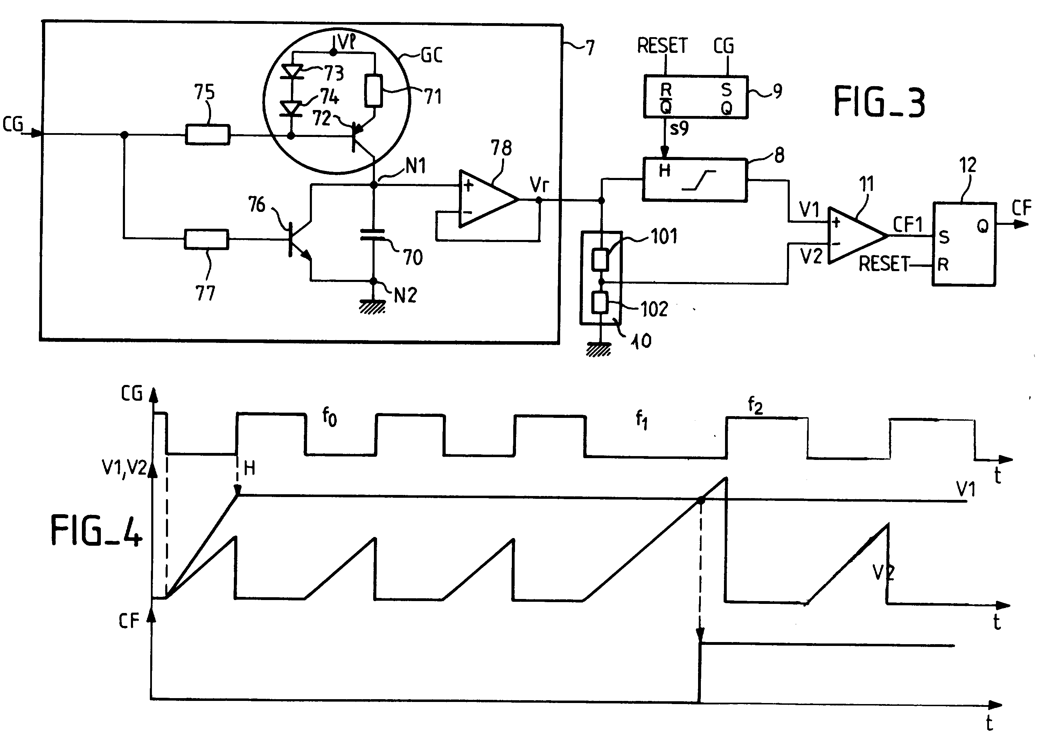

Un premier exemple de réalisation est représenté en figure 3.

Tout d'abord, le circuit de détection de fréquence comprend un circuit 7 de génération d'une rampe de tension Vr, remis à zéro par le signal CG de commande de grille du transistor de puissance Tₐ.

Dans ce mode de réalisation représenté, le circuit de génération 7 comprend un condensateur 70, dont une première borne N1 est connectée à la sortie d'un générateur de courant GC, et dont l'autre borne N2 est connectée à la masse.

Le générateur de courant comprend une résistance 71 en série avec un transistor 72 et placés entre la tension logique V1 et la borne N1 du condensateur. C'est dans l'exemple un transistor bipolaire PNP. Il comprend aussi deux diodes 73,74 en série en direct entre la tension logique V1 et la base du transistor bipolaire (ou la grille, pour un transistor MOSFET de type P).

Une résistance 75 a une borne connectée sur la grille du transistor bipolaire et reçoit sur une autre borne le signal CG de commande de grille du transistor de puissance. Cette résistance 75 et le générateur de courant GC forment un circuit de charge du condensateur 70.

Un circuit de décharge est connecté en parallèle sur le condensateur 70, qui comprend un transistor 76 de type opposé à celui (72) du générateur de courant. Dans l'exemple, c'est un transistor bipolaire de type NPN. La base de ce transistor 76 est connectée à une borne d'une résistance 77 qui reçoit sur une autre borne le signal CG de commande de grille.

La borne N1 du condensateur est appliquée en entrée positive d'un amplificateur opérationnel 78 utilisé en amplificateur suiveur (sortie rebouclée sur l'entrée négative). La sortie de cet amplificateur délivre un signal de rampe de tension Vr.

Le circuit de détection comprend aussi un circuit 8 échantillonneur-bloqueur, connecté en entrée à la sortie Vr du circuit 7 de génération de la rampe de tension, et recevant sur une entrée H un signal d'échantillonnage s9. Le signal d'échantillonnage s9 correspond à la première transition binaire du signal de commande de grille CG. Appliqué sur l'entrée H, ce signal s9 permet de maintenir en sortie V1 de l'échantillonneur-bloqueur 8, le niveau de tension de la rampe au moment de cette première transition. Le signal s9 est par exemple fournit par la sortie inversée /Q d'une bascule RS référencée 9 sur la figure 3, recevant sur son entrée de mise à (s), le signal de commande de grille CG et recevant sur son entrée de mise à zéro (R), un signal de RESET de remise à zéro générale du circuit, activé de manière classique à la mise sous tension du circuit.

Un circuit 10 diviseur de tension est aussi prévu en sortie Vr du circuit de génération de la rampe de tension, pour délivrer un signal de rampe de tension V2, dont le niveau suit celui du signal Vr, mais dans le rapport imposé par le circuit diviseur. Il comprend classiquement deux éléments résistifs 101 et 102, et le signal V2 est pris au point milieu.

Enfin un comparateur de tension 11, reçoit sur une entrée positive la sortie V1 de l'échantillonneur-bloqueur et sur une entrée négative, la sortie V2 du diviseur résistif.

Le comparateur de tension délivre en sortie un signal binaire CF1 qui vaut 1 quand le niveau de V2 est supérieur à V1 et qui vaut 0 sinon. Comme on veut distinguer l'état allumé de l'état non allumé de la lampe, on veut mémoriser le niveau haut du signal CF1 la première fois où V2 devient plus grand que V1 : on place en série sur la sortie du comparateur 11, un circuit 12 de mémorisation du niveau haut de la sortie CF1 du comparateur de tension. Ce circuit 12 peut être réalisé simplement au moyen d'une bascule de type RS, comme représenté sur la figure 3. Le signal CF1 est alors appliqué sur l'entrée de mise à un (S) de la bascule. L'entrée de mise à zéro (R) reçoit par exemple le signal RESET de remise à zéro générale à la mise sous tension. La sortie Q de la bascule délivre alors un signal binaire CF, indiquant l'état non allumé ou allumé de ladite lampe, et qui est au niveau logique zéro, tant que le niveau de la rampe de tension V2 est inférieur au niveau de la tension V1, et au niveau logique un, dès que le niveau de la rampe de tension V2 est devenu supérieur. Peu importe ensuite l'évolution du niveau de tension V2, le signal CF restera au niveau 1, indiquant l'état allumé de la lampe.

Le principe de fonctionnement sera mieux compris en examinant les diagrammes représentés sur la figure 4, représentant les signaux CG, V1, V2 et CF.

Quand le transistor de puissance Ta est bloqué, correspondant à un niveau logique 0 (tension Vl) du signal CG de commande de grille, les diodes 73, 74 sont passantes, le transistor 72 est passant et le générateur GC émet un courant qui charge le condensateur 70. Dans le même temps, le signal CG impose une tension nulle sur la grille du transistor 76 de décharge qui est donc bloqué. La charge du condensateur se traduit par une rampe de tension Vr en sortie de l'amplificateur qui passe de la tension nulle à une tension qui augmente linéairement. La rampe V2 suit une progression semblable, au rapport de division près.

Quand le transistor de puissance Ta devient conducteur, correspondant à un niveau logique 1 (tension Vl) du signal CG de commande de grille, les diodes 73, 74 sont bloquées et le générateur GC ne sort aucun courant. Par contre ce niveau du signal CG polarise la grille du transistor 76 de décharge qui devient conducteur et permet la décharge très rapide du condensateur : la rampe de tension repasse à zéro et y reste tant que le signal CG ne repasse pas à zéro. Dans cet exemple, le signal s9 correspond à la première transition 0 vers 1 détectée, fournie par le circuit 9. On maintient ainsi en sortie V1, le niveau de la rampe au moment de l'occurrence de cette première transition. Le rapport entre la rampe Vr et la rampe V2 est choisi en sorte que, en mode résonnant, c'est à dire pour une haute fréquence, la rampe V2 est remise à zéro avant d'atteindre le niveau du signal V1. Ainsi, le signal CF est toujours à zéro, indiquant que l'on travaille en mode résonnant f0, à haute fréquence, c'est à dire que la lampe n'est pas allumée.

Par contre, on a vu que quand la lampe est allumée, la fréquence de résonnance de l'ensemble lampe-circuit oscillant diminue (f1) : donc, les paliers des niveaux 0 et 1 du signal de commande CG vont augmenter. Dans ce cas, quand le niveau de la rampe de tension augmente, le signal V2 va atteindre et dépasser le niveau du signal V1 : le comparateur 11 bascule alors et le signal CF1 passe à 1, indiquant une plus basse fréquence, soit donc une lampe allumée. Une fois cette détection de lampe allumée effectuée, la bascule 12 prévue dans l'invention permet de maintenir l'information correspondante (CF=1) en sortie, quel que soit le niveau ultérieur de V2 par rapport à V1 (remise à zéro de la rampe).

Le principe de détection de fréquence selon l'invention est particulièrement avantageux, car on effectue une détection relative entre le niveau V1 et V2, ce qui permet de s'affranchir des caractéristiques des différents composants, ce qui assure une détection de fréquence fiable, et sans circuit de réglage. Ceci n'aurait pas été le cas, dans une solution utilisant un oscillateur pour comparer la fréquence du signal CG à une valeur fixe.

De préférence, on choisit un rapport de 2/3 entre Vr et V2 (V2=2/3 Vr), ce qui permet ensuite une détection relative optimum du changement de fréquence f0 vers f1. On choisit ensuite de préférence de faire travailler le circuit oscillant à une fréquence (f2) légèrement supérieure à la fréquence de résonnance (f1) du circuit quand la lampe est claquée.

Dans l'exemple de réalisation de la figure 3, on ne détecte rien sur le niveau haut du signal de commande CG. Si la fréquence diminue sur ce niveau, on ne le détectera que sur le niveau 0 suivant.

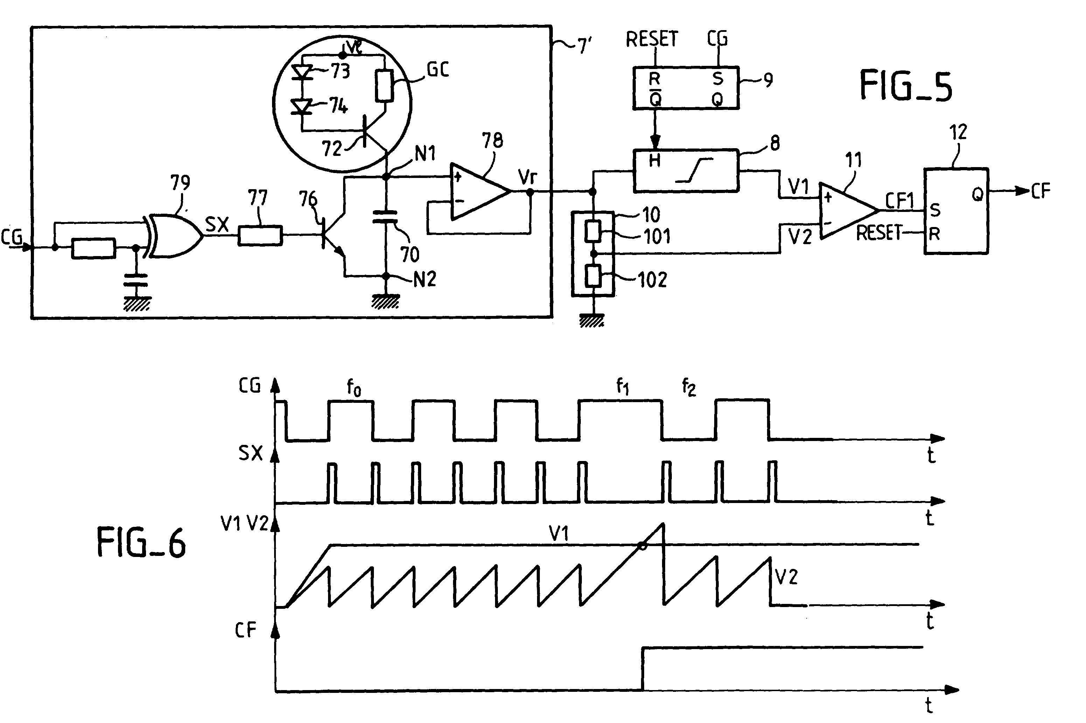

Un deuxième exemple de réalisation représenté à la figure 5 permet de détecter sur tous les niveaux.

Les mêmes éléments portent les mêmes références que sur la figure 3.

En fait, il suffit de modifier le système de charge et décharge du condensateur, pour d'une part remettre à zéro (décharge) sur chaque transition 0 vers 1 et 1 vers 0, et pour d'autre part charger pendant toute la durée du palier. Pour la charge ceci se fait simplement en utilisant le même générateur de courant GC que celui vu précédemment, mais de telle sorte qu'il ne soit plus bloqué par le signal CG de commande de grille: il débite alors un courant en permanence qui charge le condensateur 70. Par rapport à la figure 3, on supprime simplement la connexion (avec la résistance 75) du transistor 72 et des diodes 73 et 74 au signal CG.

Pour la décharge, on prévoit une porte 79 OU exclusif pour commander la grille du transistor 76 de décharge. Cette porte 79 reçoit sur une entrée le signal CG de commande de grille, et sur une autre entrée le signal de commande de grille retardé par un circuit RC parallèle. Ainsi la sortie SX de cette porte OU exclusif délivre un signal impulsionnel, la largeur de l'impulsion étant donnée par la constante de temps du circuit RC et une impulsion étant alors émise pour toute transition (0 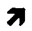 1 et 1 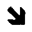 0) du signal CG de commande de grille.

Ainsi, comme représenté sur la figure 6, on peut également détecter un changement de fréquence (f0 vers f1) qui se produit sur un niveau bas du signal de commande de grille.

Selon l'invention, on utilise le circuit de détection de fréquence en relation avec les deux circuits 3 et 4 de détection de fin d'alternance pour laisser passer le courant dérivé par le circuit 5 dans un circuit de détection de fin d'alternance seulement, le signal CF délivré en sortie du circuit de détection de fréquence commandant l'état passant ou bloqué des transistors d'entrée de courant de ces circuits. Pour l'état non allumé de la lampe (CF=0), on laisse ainsi passer le courant dans le circuit 3 de détection de fin d'alternance, le transistor T3 de ce circuoit étant commandé par le signal CF, et pour l'état allumé de la lampe (CF=1), on laisse passer le courant dans le circuit 4 de détection de fin d'alternance; le transistor T4 de ce circuit étant commandé par le signal CF inversé (/CF).

L'invention ne se limite pas aux réalisations décrites. Elle permet une réalisation particulièrement sûre et peu coûteuse de dispositifs de commande de lampe fluorescente basse pression, sans transformateurs.

## Revendications

1. Dispositif de commande à transistor de commutation d'une lampe fluorescente en basse pression placée dans un circuit oscillant, caractérisé en ce qu'il comprend un circuit de détection de la fréquence du courant dans ladite lampe pour délivrer un signal d'information (CF) indiquant l'état non allumé ou allumé de ladite lampe pour commander le transistor de commutation à la fréquence de résonnance de l'ensemble du circuit oscillant et de la lampe quand ladite lampe n'est pas allumée et pour commander le transistor de commutation à une fréquence supérieure à la fréquence de résonnance dudit ensemble, quand la lampe est claquée.

2. Dispositif de commande selon la revendication 1, caractérisé en ce que le circuit (6) de détection de la fréquence est un circuit de détection d'une chute relative de fréquence.

3. Dispositif de commande selon la revendication 2, comprenant un transistor de puissance (Tₐ) avec une diode (Dₐ) en parallèle et en inverse et un circuit de commande de commutation CCₐ, placé en parallèle sur le transistor et la diode et qui délivre un signal de commande binaire de grille (CG) du transistor de puissance caractérisé en ce que le circuit de détection de fréquence comprend :
- un circuit (7) de génération d'une rampe de tension (V2) remis à zéro par le signal (CG) de commande binaire de la grille du transistor de puissance,
- un circuit (8) échantillonneur-bloqueur, connecté en entrée à la sortie (V2) du circuit de génération de la rampe de tension, pour maintenir sur sa sortie le niveau (V1) de tension de la rampe au moment d'une première transition du signal de commande binaire de la grille du transistor de puissance,
- un circuit diviseur de tension (10) en sortie (V2) du circuit de génération de la rampe de tension,
- un comparateur de tension (11), recevant en entrée la sortie (V1) de l'échantillonneur-bloqueur et une sortie (V2) du diviseur résistif, et
- un circuit (12) de mémorisation du niveau haut de la sortie (CF1) du comparateur de tension délivrant un signal binaire (CF) indiquant l'état non allumé ou allumé de ladite lampe.

4. Dispositif de commande selon la revendication 3, caractérisé en ce qu'il comprend un circuit (3) pour caler la fréquence du courant dans la lampe à la fréquence de résonnance de l'ensemble formé par le circuit oscillant et la lampe, et un circuit (4) pour caler la fréquence du courant passant dans la lampe à une fréquence supérieure à la fréquence de résonnance de l'ensemble formé par le circuit oscillant et la lampe.

5. Dispositif de commande selon la revendication 4, caractérisé en ce que la sortie (CF) du circuit de détection de fréquence commande le circuit (3) pour caler sur la fréquence de résonnance, et la sortie inversée (/CF) du circuit de détection de fréquence commande le circuit (4) pour caler sur une fréquence supérieure, pour activer le premier tant que la lampe n'est pas allumée (CF=0), et activer le second dès la détection de l'état allumé de la lampe (CF=1).

6. Dispositif de commande selon la revendication 3, caractérisé en ce que le circuit (7) de génération d'une rampe de tension est remis à zéro sur chaque transition 0 vers 1 dudit signal de commande binaire.

7. Dispositif de commande selon la revendication 3, caractérisé en ce que le circuit de génération d'une rampe de tension est remis à zéro sur chaque transition 0 vers 1 et 1 vers 0 dudit signal de commande binaire.

8. Dispositif de commande selon la revendication 3, caractérisé en ce que le circuit diviseur de tension (10) fournit un signal (V2) de l'ordre des deux tiers du signal de rampe (Vr) fourni par le circuit (7) de génération d'une rampe de tension.

## Patentansprüche

1. Vorrichtung zum Steuern einer in einem Schwingkreis angeordneten Niederdruck-Leuchtstofflampe mittels eines Schalttransistors, gekennzeichnet durch eine Schaltung zum Erfassen der Frequenz des Stroms in der Lampe, um ein Informationssignal (CF) zu liefern, welches den eingeschalteten oder nicht eingeschalteten Zustand der Lampe anzeigt, um den Schalttransistor mit der Resonanzfrequenz der aus dem Schwingkreis und der Lampe bestehenden Anordnung zu steuern, wenn die Lampe nicht eingeschaltet ist, und um den Schalttransistor mit einer Frequenz größer als die Resonanzfrequenz der Anordnung zu steuern, wenn die Lampe durchgebrannt ist.

2. Vorrichtung nach Anspruch 1, dadurch gekennzeichnet, daß die Schaltung (6) zum Erfassen der Frequenz eine Schaltung zum Erfassen eines relativen Frequenzabfalls ist.

3. Vorrichtung nach Anspruch 2, umfassend einen Leistungstransistor (Tₐ) mit einer parallel verschalteten und in Sperrichtung gepolten Diode (Dₐ) und eine Umschalt-Steuerschaltung CCₐ, die parallel zu dem Transistor und der Diode angeordnet ist und ein binäres Signal (CG) zur Steuerung des Gates des Leistungstransistors abgibt, dadurch gekennzeichnet, daß die Schaltung zum Erfassen der Frequenz umfaßt:
- eine Schaltung (7) zum Erzeugen einer Spannungsrampe (V2), die durch das binäre Signal (CG) zur Steuerung des Gates des Leistungstransistors auf Null zurückgesetzt wird,
- eine Abtast-Sperrschaltung (8), deren Eingang mit dem Ausgang (V2) der Schaltung zum Erzeugen der Spannungsrampe verbunden ist, um an ihrem Ausgang den Spannungspegel (V1) der Rampe zum Zeitpunkt eines ersten Übergangs des binären Signals zur Steuerung des Gates des Leistungstransistors zu halten,
- eine Spannungsteilerschaltung (10) am Ausgang (V2) der Schaltung zum Erzeugen der Spannungsrampe,
- einen Spannungsvergleicher (11), der am Eingang den Ausgang (V1) der Abtast-Sperrschaltung und einen Ausgang (V2) des Widerstandsteilers empfängt, und
- eine Schaltung (12) zum Speichern des hohen Pegels des Ausgangs (CF1) des Spannungsvergleichers, die ein binäres Signal (CF) abgibt, welches den nicht eingeschalteten Zustand oder den eingeschalteten Zustand der Lampe anzeigt.

4. Vorrichtung nach Anspruch 3, gekennzeichnet durch eine Schaltung (3) zum Synchronisieren der Frequenz des Stroms in der Lampe mit der Resonanzfrequenz der durch den Schwingkreis und die Lampe gebildeten Anordnung, und eine Schaltung (4) zum Synchronisieren der Frequenz des in der Lampe fließenden Stroms mit einer Frequenz größer als die Resonanzfrequenz der durch den Schwingkreis und die Lampe gebildeten Anordnung.

5. Vorrichtung nach Anspruch 4, dadurch gekennzeichnet, daß der Ausgang (CF) der Schaltung zum Erfassen der Frequenz die Schaltung (3) zum Synchronisieren auf die Resonanzfrequenz steuert, und daß das invertierte Ausgangssignal (/CF) der Schaltung zum Erfassen der Frequenz die Schaltung (4) zum Synchronisieren auf eine größere Frequenz steuert, um die erstgenannte zu aktivieren, während die Lampe nicht eingeschaltet ist (CF=0), und um die zweitgenannte zu aktivieren, sobald der eingeschaltete Zustand der Lampe (CF=1) erfaßt wird.

6. Vorrichtung nach Anspruch 3, dadurch gekennzeichnet, daß die Schaltung (7) zum Erzeugen einer Spannungsrampe bei jedem Übergang des binären Steuersignals von 0 nach 1 auf Null zurückgesetzt wird.

7. Vorrichtung nach Anspruch 3, dadurch gekennzeichnet, daß die Schaltung zum Erzeugen einer Spannungsrampe bei jedem Übergang des binären Steuersignals von 0 nach 1 und von 1 nach 0 auf Null zurückgesetzt wird.

8. Vorrichtung nach Anspruch 3, dadurch gekennzeichnet, daß die Spannungsteilerschaltung (10) ein Signal (V2) in der Größenordnung von zwei Dritteln des durch die Schaltung (7) zum Erzeugen einer Spannungsrampe abgegebenen Rampensignals (Vr) liefert.

## Claims

1. Control device with a switching transistor for a low-pressure fluorescent lamp placed in an oscillating circuit, characterised in that it comprises a circuit for detecting the frequency of the current in the said lamp in order to deliver an information signal (CF) indicating the unilluminated or illuminated state of the said lamp in order to control the switching transistor at the resonant frequency of the unit formed by the oscillating circuit and the lamp when the said lamp is not illuminated and in order to control the switching transistor at a frequency higher than the resonant frequency of the said unit when the lamp is fired.

2. Control device according to Claim 1, characterised in that the frequency detection circuit (6) is a circuit for detecting a relative drop in frequency.

3. Control device according to Claim 2, comprising a power transistor (Tₐ) with a diode (Dₐ) reverse mounted in parallel and a switching control circuit CCₐ, placed in parallel with the transistor and diode and which delivers a binary gate control signal (CG) for the power transistor, characterised in that the frequency detection circuit comprises:
- a circuit (7) for generating a voltage ramp (V2), reset to zero by the binary control signal (CG) for the gate of the power transistor,
- a sample-and-hold circuit (8), its input connected to the output (V2) of the voltage ramp generation circuit, for maintaining at its output the voltage level (V1) of the ramp during a first transition of the binary control signal for the gate of the power transistor,
- a voltage divider circuit (10) at the output (V2) of the voltage ramp generation circuit,
- a voltage comparator (11), receiving as input the output (V1) of the sample-and-hold circuit and an output (V2) of the resistive divider, and
- a circuit (12) for storing to memory the high level of the output (CF1) of the voltage comparator delivering a binary signal (CF) indicating the unilluminated or illuminated state of the said lamp.

4. Control device according to Claim 3, characterised in that it comprises a circuit (3) for setting the frequency of the current in the lamp at the resonant frequency of the unit formed by the oscillating circuit and the lamp, and a circuit (4) for setting the frequency of the current passing through the lamp at a frequency higher than the resonant frequency of the unit formed by the oscillating circuit and the lamp.

5. Control device according to Claim 4, characterised in that the output (CF) of the frequency detection circuit controls the circuit (3) for setting to the resonant frequency, and the inverted output (/CF) of the frequency detection circuit controls the circuit (4) for setting to a higher frequency, so as to activate the first when the lamp is not illuminated (CF=0) and to activate the second as soon as the illuminated state of the lamp (CF=1) is detected.

6. Control device according to Claim 3, characterised in that the voltage ramp generation circuit (7) is reset to zero at each transition from 0 to 1 of the said binary control signal.

7. Control device according to Claim 3, characterised in that the voltage ramp generation circuit is reset to zero at each transition from 0 to 1 and from 1 to 0 of the said binary control signal.

8. Control device according to Claim 3, characterised in that the voltage divider circuit (10) supplies a signal (V2) of the order of two thirds of the ramp signal (Vr) supplied by the voltage ramp generation circuit (7).
